# EUROPEAN PATENT SPECIFICATION

(11) **EP 2 969 743 B1**
(45) Date of publication and mention of the grant of the patent: **21.10.2020**
(21) Application number: 14779670.0
(22) Date of filing: 05.03.2014
(51) Int. Cl.: B64C 1/12

(54) **AIRCRAFT COMPONENT AND METHOD OF MAKING AN AIRCRAFT COMPONENT**
FLUGZEUGKOMPONENTE UND VERFAHREN ZUR HERSTELLUNG EINER FLUGZEUGKOMPONENTE
COMPOSANT D'AÉRONEF ET PROCÉDÉ DE FABRICATION D'UN COMPOSANT D'AÉRONEF

(30) Priority: 13.03.2013 US 201313800464
(43) Date of publication of application: 20.01.2016
(73) Proprietor: Gulfstream Aerospace Corporation, Savannah, GA 31402 (US)
(72) Inventor: SAMMONS, Guy, Savannah, Georgia 31402 (US)
(74) Representative: LKGLOBAL Lorenz & Kopf PartG mbB Patentanwälte
(86) International application number: PCT/US2014/020663
(87) International publication number: WO 2014/164121

(56) References cited:
- US-A- 2 807 437
- US-A- 4 671 470
- US-A1- 2002 195 524
- US-A1- 2004 011 927
- US-A1- 2006 113 450
- US-A1- 2007 261 787
- US-B1- 7 037 568
- US-B1- 7 238 409

## Description

### TECHNICAL FIELD

The present invention generally relates to aircraft and more particularly relates to an aircraft component and a method for making an aircraft component.

### BACKGROUND

Modern passenger aircraft include many different components. Several of these components come into contact with the free stream while the aircraft is in flight. Some common aircraft components include the wings, the flaps, the ailerons, the vertical stabilizer and the horizontal stabilizer, to name just a few. Such components commonly include upper and lower panels that interface with the free stream and an internal support structure that supports the upper and lower panels and that gives the aircraft component its shape.

An important design goal for aircraft designers is to minimize the weight of an aircraft as much as possible. Towards this end, the upper and lower panels of an aircraft component have historically been fabricated from lightweight metals, such as aluminum. In recent years, however, there has been movement away from the use of lightweight metals in the construction of the upper and lower panels in favor of composite materials. This is because composite materials weigh significantly less than metal materials.

Another important design goal for aircraft designers is to minimize the cost of manufacturing the aircraft. Towards this end, low cost materials are preferred over higher cost materials.

The goal of using lightweight materials in the manufacture of aircraft and the goal of reducing the cost of manufacturing an aircraft are sometimes at odds with one another. For example, lightweight metals such as aluminum are heavier than, but are also less expensive than, composites materials. This situation requires aircraft designers to choose between constructing a light weight aircraft component and constructing a low cost aircraft component.

Another problem associated with the manufacture of aircraft components is the increasing level of complexity associated with their assembly. The assembling of a typical aircraft component may entail the precise alignment of upper and lower panels, the precise positioning of internal support structures, the precise alignment of rivets or other fasteners, the use of braces and other temporary support structures to hold the various components in their respective positions during the assembly process and the removal of such temporary support structures subsequent to assembly of the aircraft component. Such elaborate assembly requirements can pose a very complicated mechanical challenge to a work force that is increasingly computer savvy and diminishingly mechanically inclined.

US 7 037 568 B1 describes a structure for supporting two opposed skins. A joining member is provided for mechanically joining a skin to a supporting rib. The joining member includes a groove having an inner surface adapted for receiving and bonding to an outer edge of the rib via a layer of an adhesive material. The joining member does not provide the attachment of the edge of the rib in a snap-fit manner.

US 2007/261787 A1 describes a composite member which is joined to another composite or non-composite member, using liquid or paste adhesive resin that cures in the joint. The joint is configured in such a way that the adhesive forms an interlocking key within recesses in the joined members that prevents joint disassembly once the adhesive has cured and hardened.

US 2807437 A describes method of making hollow powdered metal parts which comprises shaping a pair of powdered metal compacts into a pair of sections each having longitudinally extending marginal portions and an intermediately recessed portion between said marginal portions, coining said sections to provide the marginal portions thereof with a greater porosity than the intermediate portions thereof, assembling said pair of sections together with the longitudinally extending marginal portions of one of said pair of sections abutting the longitudinally extending marginal portions of the other of said sections, with the recessed portions of both of said sections cooperating to form a hollow central portion between the abutting portions, and infiltrating the assembled sections with an infiltrant metal along the greater porosity abutting portions to bond said abutting portions together.

US 2004 011927 A1 describes an apparatuses and methods for joining structural members. In one embodiment, an apparatus for joining a first member to a second member includes a first part and a second part configured to be engaged with and bonded to the first part. In one aspect of this embodiment, the first part includes a first surface facing a first direction, a second surface facing a second direction different than the first direction, a first recess at least proximate to the first surface, and a second recess at least proximate to the second surface.

US 7238409 B1 describes a structural element for use in aerospace applications such as a structural element suitable as an aircraft component. The composite structure comprises: (a) a rib having a first end and a second end; (b) at least one member such as a face sheet having an inner surface and an outer surface; and (c) a rib-receiving member integral to the inner surface of the at least one member, wherein the rib-receiving member comprises at least one rib-receiving element having an opening therein for receiving the first end of the rib and at least one cover sheet having an opening therein for receiving the first end of the rib.

US 2006 113450 A1 describes a self-locating feature for a pi-joint assembly. The pi-joint assembly includes a substructure, a member coupled to the substructure. The substructure includes one or more land extending above one of a front side and a back side of the substructure.

US 2002 195524 A1 describes a wing of composite material with an upper skin, a lower skin and a plurality of intermediate spars arranged between the upper and the lower skin. The intermediate spars extend from roots to tips of the upper and the lower skins. The intermediate spars are integrally formed with the upper and the lower skins or are adhesively bonded to the upper and the lower skins.

US 4671470 A describes improvements in the method by which elongate frame elements such as the spars in aircraft wings are fastened to the skin panels. Such method consisting of preparing the panel to receive its frame elements by cutting elongate grooves spanwise through the inner facesheet and the core therebeneath while leaving the outer facesheet intact.

Accordingly, it is desirable to provide an aircraft component that addresses the design objectives of both lower cost and lower weight. Furthermore, it is desirable to provide an aircraft component that can reduce the complexity associated with its assembly. Other desirable features and characteristics will become apparent from the subsequent summary and detailed description and the appended claims, taken in conjunction with the accompanying drawings and the foregoing technical field and background.

### BRIEF SUMMARY

The object of the present invention is solved by the subject-matter of the independent claims, wherein further embodiments are incorporated in the dependent claims. An aircraft component and a method of making an aircraft component are disclosed herein.

The claims define the invention.

### BRIEF DESCRIPTION OF THE DRAWINGS

The present invention will hereinafter be described in conjunction with the following drawing figures, wherein like numerals denote like elements, and
FIG. 1 is a perspective view of a non-limiting embodiment of an aircraft component made in accordance with the teachings of the present disclosure;
FIG. 2 is a perspective view of the aircraft component of FIG. 1 with an upper panel removed;
FIG. 3 is a perspective view of a non-limiting embodiment of an upper panel compatible for use with the aircraft component illustrated in FIG. 1;
FIG. 4 is a perspective view of a non-limiting embodiment of a web section compatible for use with the aircraft component illustrated in FIG. 1;
FIG. 5 is an exploded cross-sectional view illustrating a portion of the aircraft component of FIG. 1 prior to assembly;
FIG. 6. is an expanded cross-sectional view of the portion of FIG. 5 subsequent to assembly; and
FIG. 7 is a flow diagram illustrating an embodiment of a method for making an aircraft component in accordance with the teachings of the present disclosure.

### DETAILED DESCRIPTION

An improved aircraft component is disclosed herein. In an embodiment, the aircraft component includes an upper panel having a least one upper panel channc1, a lower panel having at least one lower panel channel, and at least one web section having an upper channel engagement portion and a lower channel engagement portion. The web section and the upper and lower panels are configured to engage one another. In all embodiments, these components are configured to engage one another in a snap-fit manner. Such engagement permits rapid, simple, and repeatable assembly of the aircraft component. Adhesive is applied where the upper and lower engagement portions engage the upper channel and the lower channel, respectively.

The individual components can be loosely assembled in a press, and through the application of compressive forces, can be quickly coupled to one another. The completed aircraft component can then be immediately removed from the press without waiting for the adhesive to cure. Such immediate removal is made possible because the engagement of the components permits them to maintain their coupled configuration despite the absence of the compressive forces from the press and despite the adhesive forces of the cured adhesive. This ability to remove the assembled aircraft component from the press before the adhesive cures facilitates the rapid fabrication of multiple aircraft components in the time previously required to fabricate one aircraft component.

A conventional aircraft component couples the upper and lower panels to the web sections through the use of fasteners (e.g., rivets, bolts, and the like). Such fasteners add weight and, in some applications, an aesthetically displeasing appearance to the finished aircraft component. The aircraft component disclosed herein, however, uses the adhesive to couple the upper and lower panels to the web sections and therefore eliminates the fasteners from the finished assembly. By eliminating the fasteners, in some instances the aircraft component can be made of lightweight metals such as aluminum, yet have a weight that is roughly equivalent or lower than a comparably sized composite aircraft component. Thus, the various configurations disclosed herein provide the cost advantage associated with lightweight metals and the weight advantage associated with composite materials. Additionally, the use of channels and web sections that engage one another in a snap-fit manner simplifies the assembly process, thereby permitting existing workforces to easily and quickly assembly the aircraft components.

A greater understanding of the aircraft component described above and of the method for making the aircraft component may be obtained through a review of the illustrations accompanying this application together with a review of the detailed description that follows.

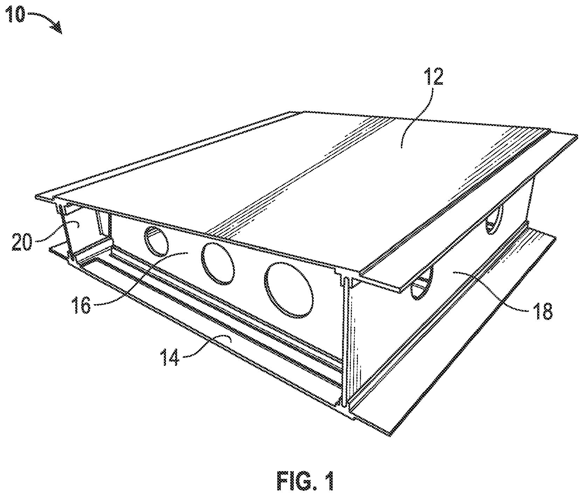

FIG. 1 is a perspective view illustrating a non-limiting embodiment of an aircraft component 10 made in accordance with the teachings of the present disclosure. Aircraft component 10 may be suitable for use in a wing, an aileron, a flap, a vertical stabilizer, a horizontal stabilizer, and/or any other part of an aircraft that comes in contact with the free stream. In some embodiments, aircraft component 10 may be suitable for use in other applications that do not come into contact with the free stream but rather, are internal to the aircraft.

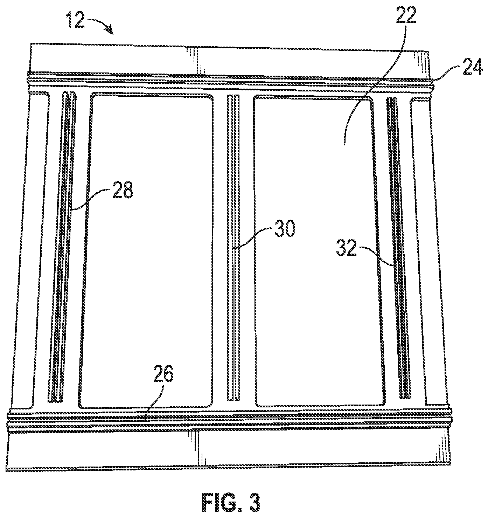

Aircraft component 10 includes an upper panel 12, a lower panel 14, and a plurality of web sections such as web section 16, web section 18, and web section 20. Upper panel 12 and lower panel 14 include channels (see FIG. 3) to receive the various web sections and to ensure their proper alignment and positioning during the assembly process.

In the illustrated embodiment, upper panel 12 and lower panel 14 are coupled together by the cooperation of web sections 16, 18, and 20 with an adhesive. Unlike conventional aircraft components, aircraft component 10 does not require the use of rivets, nuts, bolts, or other fasteners to maintain upper panel 12 and lower panel 14 in a coupled relationship. Laboratory testing has been performed and has confirmed that the use of a web section (such as web sections 16, 18, and 20) with an adhesive to join upper and lower panels (such as upper panel 12 and lower panel 14) provides a robust coupling despite the absence of any additional mechanical fasteners. In some examples, testing has revealed that the solid metal portions of web sections 16, 18, and 20 will fail under stress before failure occurs in the joint formed between the web sections and the channels of the upper and lower panels. The use of snap-fit joints and an adhesive to join web sections 16, 18, and 20 to upper and lower panels 12 and 14 yields a substantial weight savings over conventional aircraft components that utilize mechanical fasteners.

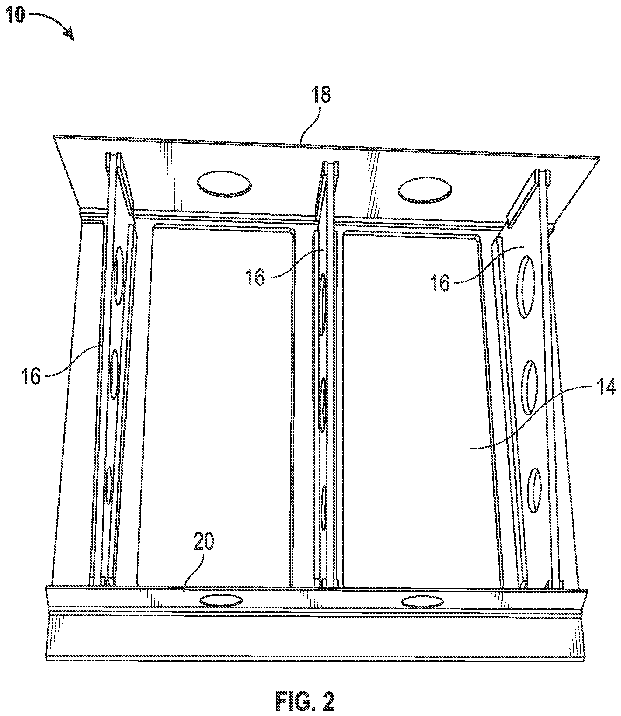

FIG. 2 is a perspective view illustrating aircraft component 10 with upper panel 12 (see FIG. 1) removed to permit observation of the interior of aircraft component 10. Web sections 18 and 20 are arranged at a transverse angle to the three illustrated web sections 16. This transverse arrangement enhances the structural stability of aircraft component 10. The spacing between web sections 16 and/or between web sections 18 and 20 can be varied depending upon desired weight/strength/stiffness goals for aircraft component 10.

In the illustrated embodiment, web sections 16, 18, and 20 (and the corresponding channels in upper panel 12 and lower panel 14) extend for substantially the entire length along upper panel 12 and lower panel 14. In other embodiments, the web sections and corresponding channels may extend only partially along a length of the upper and lower panels without departing from the teachings of the present disclosure.

FIG. 3 is a perspective view of upper panel 12. Lower panel 14 (see FIG. 1) is substantially identical and therefore the description provided herein with respect to upper panel 12 applies equally to lower panel 14. A plurality of channels are disposed on a surface 22 of upper panel 12. In the illustrated embodiment, channels 24 and 26 extend in a longitudinal direction along surface 22 while channels 28, 30, and 32 extend laterally along surface 22. While in the illustrated embodiment, channels 24, 26, 28, 30, and 32 are disposed on surface 22 and protrude above surface 22, in other embodiments, the channels may be defined in upper panel 12 such that they are disposed below surface 22. As will be discussed in greater detail below, channels 24, 26, 28, 30, and 32 include a pair of oppositely disposed lips that are configured to engage a barb disposed along an engagement portion of web sections 18, 20, and 16, respectively. This configuration permits upper panel 12 and lower panel 14 to snap-fit to web sections 16, 18, and 20. Other configurations to permit engagement are also possible.

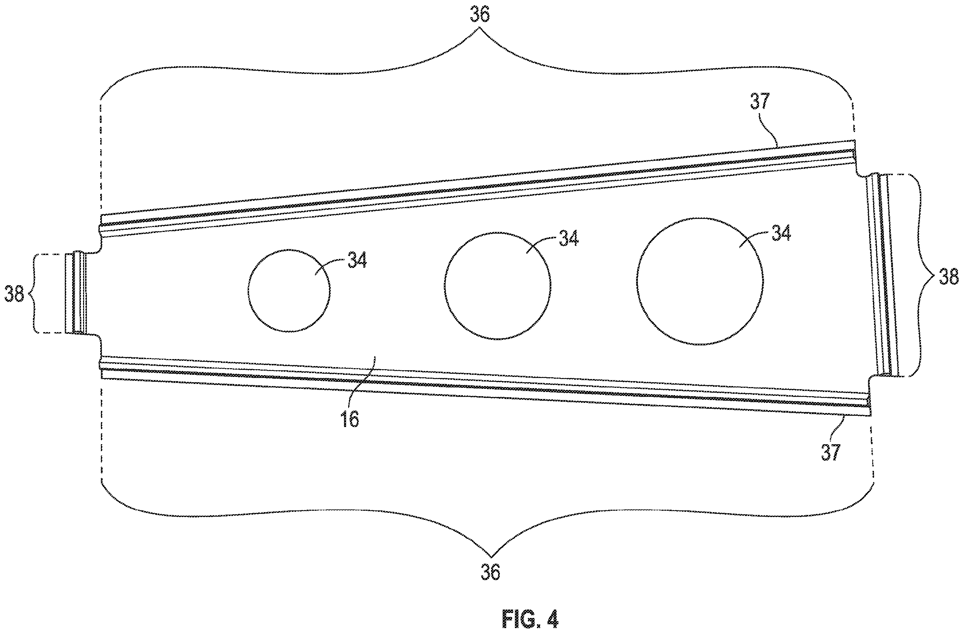

FIG. 4 is a perspective view illustrating web section 16. With continued reference to FIGS. 1-3, web section 16 has a tapered contour to impart a desired taper to aircraft component 10. Web section 16 further includes openings 34 that extend through web section 16. Openings 34 reduce the amount of material that is needed to fabricate web section 16, thus reducing both the weight and the cost of web section 16.

Web section 16 further includes engagement portions 36 disposed along opposite sides of web section 16. In some embodiments, engagement portions 36 may have a thickness that differs from the thickness of the remainder of web section 16. Engagement portions 36 are configured to engage channels 28, 30, and 32 of upper panel 12 and lower panel 14 in a snap-fit manner. In the illustrated embodiment, engagement portions 36 each include a barb 37 that extends along a length of each engagement portion 36 to facilitate snap-fit engagement with channels 28, 30, and 32. In the illustrated embodiment, barb 37 extends along an entire length of each engagement portion 36 while in other embodiments, barb 37 may extend for only a portion of the length along each engagement portion 36, while in still other embodiments, barb 37 may extend in a broken or intermittent manner along each engagement portion 36.

Web section 16 further includes engagement portions 38. Engagement portions 38 are configured to engage channels that are disposed on web sections 18 and 20. Engagement (e.g., snap-fit engagement) of engagement portions 38 with channels disposed on web sections 18 and 20 enhances the strength and stability of aircraft component 10, imparting a matrix-like structure to the finished component.

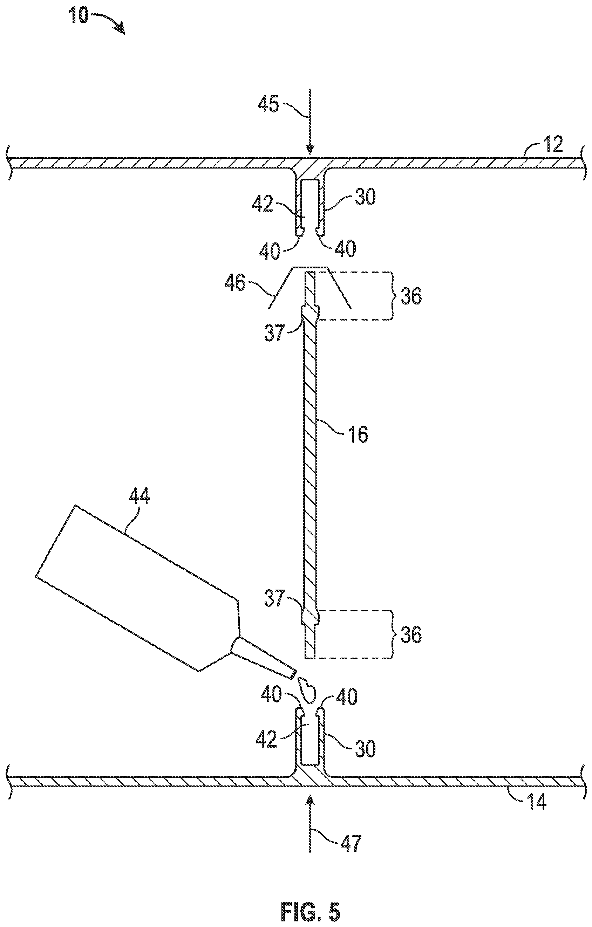

FIG. 5 is an exploded cross-sectional view illustrating a portion of aircraft component 10. Upper panel 12 and lower panel 14 are positioned opposite one another such that their respective channels 30 come into alignment. Web section 16 is positioned between upper panel 12 and lower panel 14 such that the upper and lower engagement portions 36 are aligned with channels 30 or upper panel 12 and lower panel 14, respectively. Although web section 16 has been illustrated at a substantially perpendicular angle with respect to upper panel 12 and lower panel 14, it should be understood that channels 30 may be oriented at any desirable angle which would, in turn, permit web section 16 to engage upper panel 12 and lower panel 14 at a corresponding angle.

In the view presented in FIG. 5, barbs 37 of each engagement portion 36 can be observed. Additionally, each channel 30 includes a pair of lips 40 that are configured to form a cavity 42. Cavity 42 is configured to engage with, and retain, barb 37 once barb 37 engages channel 30.

Before engagement portions 38 are engaged with channels 30, an adhesive is applied to the joint. The adhesive may be either a liquid adhesive 44 or a film adhesive 46, or both. If liquid adhesive 44 is utilized, it is squeezed into channel 30 before engagement portion 38 is inserted into channel 30. If film adhesive 46 is utilized, it will be wrapped around engagement portion 38 prior to insertion of engagement portion into channel 30. Once the adhesive is in place, the components are pressed together in the direction indicated by arrows 45 and 47.

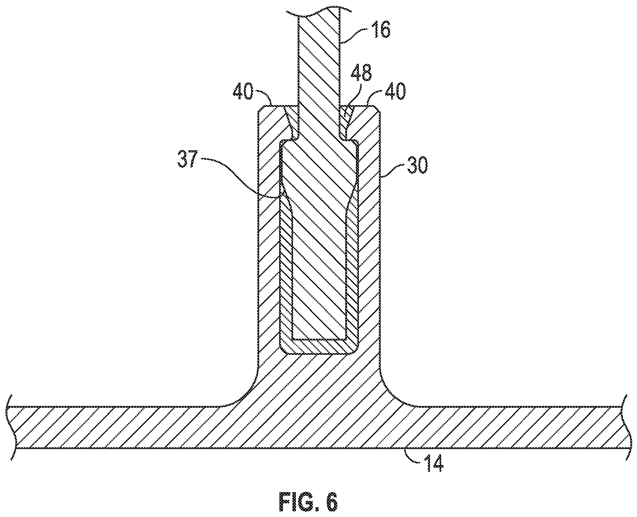

FIG. 6. is an expanded cross-sectional view of the joint formed between lower panel 14 and web section 16 after engagement portion 38 (see FIG. 5) is snap-fit into engagement with channel 30. In this view, an adhesive layer 48 can be observed in the joint. Adhesive layer 48 may be comprised of either liquid adhesive 44 or film adhesive 46, or a combination thereof. By disposing adhesive layer 48 around three sides of engagement portion 38 (see FIG. 5), a very robust coupling can be achieved between web section 16 and lower panel 14, thus obviating the need for mechanical fasteners.

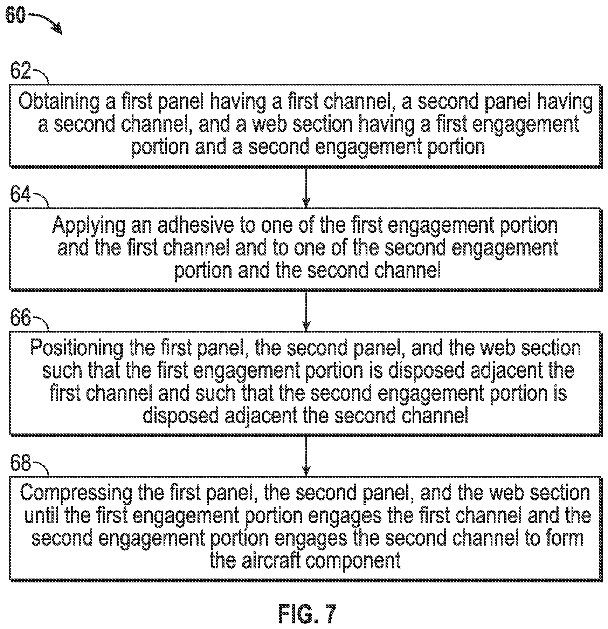

FIG. 7 is a flow diagram illustrating an embodiment of a method 60 for making an aircraft component in accordance with the teachings of the present disclosure. With continuing reference to FIGS. 1-6, at step 62, an upper panel, a lower panel, and a web section such as, but not limited to, upper panel 12, lower panel 14, and web section 16, respectively, are obtained.

In some embodiments of method 60, these components may obtained from a supplier while in other embodiments, these components may be fabricated as part of making the aircraft component. To fabricate the panels and web sections, obtain three billets of material (e.g., aluminum), one billet corresponding to the upper panel, one billet corresponding to the lower panel, and one billet corresponding to the web section. Each billet of material may have a thickness that is only slightly thicker than the desired final thickness of the completed component that it corresponds to.

Once the three billets of material have been obtained, remove material from each billet to reduce its thickness to the desired thickness of the finished upper panel, lower panel, and web section, respectively. In some embodiments, it may be desirable to machine each billet in order to reduce its thickness. In other embodiments, the material may be removed from the billet in any other suitable manner.

Once the desired thickness for each billet has been reached, form one or more channels on two of the billets. In embodiments where the channels will protrude above the surface of the panel, the channels may be formed when the thickness of each billet is reduced. In other embodiments where the channels will be located below the surface of the panel, additional material will be removed from the billet after its desired thickness has been obtained. On the third billet, modify its end portions to form engagement portions. In some embodiments, this may entail adding a barb along opposite edges of the billet.

Once the upper panel, lower panel, and web section have been obtained, at step 64, an adhesive is applied to the joint that couples the upper and lower panels to the web section. In some embodiments, this may entail squeezing a liquid adhesive into the channel. In other embodiments, a film adhesive may be wrapped around the engagement portions of the web section. In some embodiments, the adhesive may be applied along the entire length of the channel/engagement portion while in other embodiments, it may be sufficient to apply the adhesive along a length less than the entire length of the channel/engagement portion.

At step 66, the upper panel, the lower panel, and the web section are aligned with one another prior to snap-fit engagement. In some embodiments, this step requires that the components be placed in a press. The upper panel and the lower panel will be positioned in the press such that their respective channels are disposed opposite one another. The web section is positioned such that its engagement portions are positioned adjacent the channels of the upper and lower panels. In some embodiments, prior to compressing the components together, the engagement portions may partially engage the channels of the upper and lower panel such that the components may independently maintain their final configuration without the assistance of external or additional bracing structures.

At step 68, the components are compressed together to cause the engagement portions of the web section to engage the channels of the upper and lower panel in a snap-fit manner. In some embodiments, this may be accomplished using a press while in other embodiments, it may be possible to compress the components together by hand.

Once the components have been snap-fit together, assembly of the aircraft component is complete. The aircraft component may be removed from the press without delay because the snap-fit features (or other type of engagement feature) enable the components to remain attached together without having to wait until the adhesive cures. This feature permits a shorter cycle time than would be required if the aircraft component lacked the snap-fit/engagement features of the aircraft component disclosed herein because a conventional aircraft component would need to remain in the press for a longer period of time while the adhesive cures.

## Claims

1. An aircraft component comprising:
a first panel including a first channel;
a second panel including a second channel, the second panel positioned such that the second channel is aligned with the first channel;
a web section disposed adjacent the first panel and the second panel, the web section including a first engagement portion and a second engagement portion, the first engagement portion engaged with the first channel and the second engagement portion engaged with the second channel; and an adhesive disposed between the first engagement portion and the first channel and between the second engagement portion and the second channel, wherein the first panel and the second panel are joined together by cooperation of the web section and the adhesive;
wherein the first engagement portion and the first channel are configured to snap-fit together and wherein the second engagement portion and the second channel are configured to snap-fit together.

2. The aircraft component of claim 1, wherein , preferably, the first engagement portion includes a first barb extending along a length of the first engagement portion, the first channel comprises a first lip extending along a length of the first channel, and the first lip is configured to engage the first barb when the first engagement portion is inserted into the first channel, and wherein the second engagement portion includes a second barb extending along a length of the second engagement portion, the second channel comprises a second lip extending along a length of the second channel, and the second lip is configured to engage the second barb when the second engagement portion is inserted into the second channel.

3. The aircraft component of claim 1, wherein the aircraft component is substantially free of any fasteners.

4. The aircraft component of claim 1, wherein the first panel is disposed opposite the second panel and wherein the web section is disposed between the first panel and the second panel.

5. The aircraft component of claim 1, wherein the first panel includes a plurality of the first channels, wherein the second panel includes a respective plurality of the second channels, the aircraft component further comprising a respective plurality of the web sections, wherein each web section is engaged with a respective first channel and a respective second channel, and wherein the adhesive is disposed between each first engagement portion of each web section and each respective first channel and between each second engagement portion of each web section and each respective second channel; and wherein, preferably, one first channel of the plurality of first channels is out of alignment with another first channel of the plurality of first channels, wherein one second channel of the plurality of second channels is out of alignment with another second channel of the plurality of second channels, and wherein the one first channel is aligned with the one second channel.

6. The aircraft component of claim 1, wherein the adhesive is engaged with three sides of the first engagement portion and with three sides of the second engagement portion.

7. The aircraft component of claim 1, wherein the adhesive comprises:
i) a liquid adhesive; or
ii) a film adhesive.

8. The aircraft component of claim 1, wherein the first panel, the second panel, and the web section each comprise a metal material; and wherein, preferably, the metal material comprises aluminum.

9. A method of making an aircraft component, the method comprising the steps of:
obtaining a first panel having a first channel, a second panel having a second channel, and a web section having a first engagement portion and a second engagement portion; applying an adhesive to one of the first engagement portion and the first channel and to one of the second engagement portion and the second channel;
positioning the first panel, the second panel, and the web section such that the first engagement portion is disposed adjacent the first channel and such that the second engagement portion is disposed adjacent the second channel;
compressing the first panel, the second panel, and the web section until the first engagement portion engages the first channel and the second engagement portion engages the second channel to form the aircraft component; wherein the first engagement portion and the first channel are configured to snap-fit together and wherein the second engagement portion and the second channel are configured to snap-fit together.

10. The method of claim 9, wherein the obtaining step comprises:
obtaining at least three billets of material;
removing material from a first billet to produce a first subcomponent having a first desired thickness;
removing material from a second billet to produce a second subcomponent having a second desired thickness;
removing material from a third billet to produce a third subcomponent having a third desired thickness;
defining a first channel in the first subcomponent to form the first panel; defining a second channel in the second subcomponent to form the second panel;
defining a first engagement portion and a second engagement portion on the third subcomponent to form a web section.

11. The method of claim 10, wherein the obtaining step comprises:
obtaining a first billet of material having a first initial thickness that is insubstantially thicker than the first desired thickness;
obtaining a second billet of material having a second initial thickness that is insubstantially thicker than the second desired thickness; and obtaining a third billet of material having a third initial thickness that is insubstantially thicker than the third desired thickness.

12. The method of claim 10, wherein removing material from the first billet comprises machining the first billet, wherein removing material from the second billet comprises machining the second billet, and wherein removing material from the third billet comprises machining the third billet.

13. The method of claim 10, wherein defining the first channel comprises defining a first pair of engaging lips, wherein defining the second channel comprises defining a second pair of engaging lips, wherein defining the first engagement portion comprises defining a first barb along a first edge of the third subcomponent, and wherein defining the second engagement portion comprises defining a second barb along a second edge of the third subcomponent.

14. The method of claim 9, wherein the compressing step comprises compressing the first panel, the second panel, and the web section in a press; and wherein, preferably, the aircraft component is removed from the press before the adhesive cures.

15. The method claim of claim 9, wherein the first engagement portion includes a first barb configured for snap-fit engagement with the first channel, wherein the second engagement portion includes a second barb configured for snap-fit engagement with the second channel, and wherein the compressing step comprises compressing the first panel, the second panel, and the web section until the first engagement portion and the first channel snap together and until the second engagement portion and the second channel snap together.

## Patentansprüche

1. Flugzeugbauteil, das Folgendes umfasst
eine erste Tafel, die einen ersten Kanal einschließt,
eine zweite Tafel, die einen zweiten Kanal einschließt, wobei die zweite Tafel derart angeordnet ist, dass der zweite Kanal mit dem ersten Kanal ausgerichtet ist,
ein Stegsektion, die angrenzend an die erste Tafel und die zweite Tafel angeordnet ist, wobei die Stegsektion einen ersten Eingriffsabschnitt und einen zweiten Eingriffsabschnitt, wobei der erste Eingriffsabschnitt mit dem ersten Kanal in Eingriff gebracht ist und der zweite Eingriffsabschnitt mit dem zweiten Kanal in Eingriff gebracht ist, und einen Klebstoff, der zwischen dem ersten Eingriffsabschnitt und dem ersten Kanal und zwischen dem zweiten Eingriffsabschnitt und dem zweiten Kanal angeordnet ist, einschließt, wobei die erste Tafel und die zweite Tafel durch Zusammenwirken der Stegsektion und des Klebstoffs miteinander verbunden sind,
wobei der erste Eingriffsabschnitt und der erste Kanal dafür konfiguriert sind, miteinander einzurasten, und wobei der zweite Eingriffsabschnitt und der zweite Kanal dafür konfiguriert sind, miteinander einzurasten.

2. Flugzeugbauteil nach Anspruch 1, wobei, vorzugsweise, der erste Eingriffsabschnitt einen ersten Widerhaken einschließt, der sich entlang einer Länge des ersten Eingriffsabschnitts erstreckt, der erste Kanal eine erste Lippe umfasst, die sich entlang einer Länge des ersten Kanals erstreckt, und die erste Lippe dafür konfiguriert ist, den ersten Widerhaken in Eingriff zu nehmen, wenn der erste Eingriffsabschnitt in den ersten Kanal eingesetzt wird, und wobei der zweite Eingriffsabschnitt einen zweiten Widerhaken einschließt, der sich entlang einer Länge des zweiten Eingriffsabschnitts erstreckt, der zweite Kanal eine zweite Lippe umfasst, die sich entlang einer Länge des zweiten Kanals erstreckt, und die zweite Lippe dafür konfiguriert ist, den zweiten Widerhaken in Eingriff zu nehmen, wenn der zweite Eingriffsabschnitt in den zweiten Kanal eingesetzt wird.

3. Flugzeugbauteil nach Anspruch 1, wobei das Flugzeugbauteil im Wesentlichen frei von jeglichen Befestigungselementen ist.

4. Flugzeugbauteil nach Anspruch 1, wobei die erste Tafel gegenüber der zweiten Tafel angeordnet ist und wobei die Stegsektion zwischen der ersten Tafel und der zweiten Tafel angeordnet ist.

5. Flugzeugbauteil nach Anspruch 1, wobei die erste Tafel eine Vielzahl der ersten Kanäle einschließt, wobei die zweite Tafel eine entsprechende Vielzahl der zweiten Kanäle einschließt, wobei das Flugzeugbauteil ferner eine entsprechende Vielzahl der Stegsektionen umfasst, wobei jede Stegsektion mit einem jeweiligen ersten Kanal und einem jeweiligen zweiten Kanal in Eingriff gebracht ist und wobei der Klebstoff zwischen jedem ersten Eingriffsabschnitt jeder Stegsektion und jedem jeweiligen ersten Kanal und zwischen jedem zweiten Eingriffsabschnitt jeder Stegsektion und jedem jeweiligen zweiten Kanal angeordnet ist und wobei, vorzugsweise, sich ein erster Kanal der Vielzahl von ersten Kanälen außer Ausrichtung mit einem anderen ersten Kanal der Vielzahl von ersten Kanälen befindet, wobei sich ein zweiter Kanal der Vielzahl von zweiten Kanälen außer Ausrichtung mit einem anderen zweiten Kanal der Vielzahl von zweiten Kanälen befindet, und wobei der eine erste Kanal mit dem einen zweiten Kanal ausgerichtet ist.

6. Flugzeugbauteil nach Anspruch 1, wobei der Klebstoff mit drei Seiten des ersten Eingriffsabschnitts und mit drei Seiten des zweiten Eingriffsabschnitts in Eingriff gebracht ist.

7. Flugzeugbauteil nach Anspruch 1, wobei der Klebstoff Folgendes umfasst:
i) einen flüssigen Klebstoff oder
ii) eine Klebefolie.

8. Flugzeugbauteil nach Anspruch 1, wobei die erste Tafel, die zweite Tafel und die Stegsektion jeweils einen Metallwerkstoff umfassen und wobei, vorzugsweise, der Metallwerkstoff Aluminium umfasst.

9. Verfahren zum Herstellen eines Flugzeugbauteils, wobei das Verfahren die folgenden Schritte umfasst:
Erlangen einer ersten Tafel, die einen ersten Kanal aufweist, einer zweiten Tafel, die einen zweiten Kanal aufweist, und einer Stegsektion die einen ersten Eingriffsabschnitt und einen zweiten Eingriffsabschnitt aufweist, Aufbringen eines Klebstoffs auf eines von dem ersten Eingriffsabschnitt und dem ersten Kanal und auf eines von dem zweiten Eingriffsabschnitt und dem zweiten Kanal,
Positionieren der ersten Tafel, der zweiten Tafel und der Stegsektion derart, dass der erste Eingriffsabschnitt angrenzend an den ersten Kanal angeordnet ist, und derart, dass der zweite Eingriffsabschnitt angrenzend an den zweiten Kanal angeordnet ist,
Zusammendrücken der ersten Tafel, der zweiten Tafel und der Stegsektion, bis der erste Eingriffsabschnitt den ersten Kanal in Eingriff nimmt und der zweite Eingriffsabschnitt den zweiten Kanal in Eingriff nimmt, um das Flugzeugbauteil zu bilden, wobei der erste Eingriffsabschnitt und der erste Kanal dafür konfiguriert sind, miteinander einzurasten, und wobei der zweite Eingriffsabschnitt und der zweite Kanal dafür konfiguriert sind, miteinander einzurasten.

10. Verfahren nach Anspruch 9, wobei der Erlangensschritt Folgendes umfasst:
Erlangen wenigstens dreier Werkstoffblöcke,
Entfernen von Werkstoff von einem ersten Block, um ein erstes Unterbauteil zu erzeugen, das eine erste gewünschte Dicke aufweist,
Entfernen von Werkstoff von einem zweiten Block, um ein zweites Unterbauteil zu erzeugen, das eine zweite gewünschte Dicke aufweist,
Entfernen von Werkstoff von einem dritten Block, um ein drittes Unterbauteil zu erzeugen, das eine dritte gewünschte Dicke aufweist,
Definieren eines ersten Kanals in dem ersten Unterbauteil, um die erste Tafel zu bilden, Definieren eines zweiten Kanals in dem zweiten Unterbauteil, um die zweite Tafel zu bilden,
Definieren eines ersten Eingriffsabschnitts und eines zweiten Eingriffsabschnitts an dem dritten Unterbauteil, um eine Stegsektion zu bilden.

11. Verfahren nach Anspruch 10, wobei der Erlangensschritt Folgendes umfasst:
Erlangen eines ersten Werkstoffblocks, der eine erste anfängliche Dicke aufweist, die unwesentlich dicker ist als die erste gewünschte Dicke,
Erlangen eines zweiten Werkstoffblocks, der eine zweite anfängliche Dicke aufweist, die unwesentlich dicker ist als die zweite gewünschte Dicke, und Erlangen eines dritten Werkstoffblocks, der eine dritte anfängliche Dicke aufweist, die unwesentlich dicker ist als die dritte gewünschte Dicke.

12. Verfahren nach Anspruch 10, wobei das Entfernen von Werkstoff von dem ersten Block das spanende Bearbeiten des ersten Blocks umfasst, wobei das Entfernen von Werkstoff von dem zweiten Block das spanende Bearbeiten des zweiten Blocks umfasst und wobei das Entfernen von Werkstoff von dem dritten Block das spanende Bearbeiten des dritten Blocks umfasst.

13. Verfahren nach Anspruch 10, wobei das Definieren des ersten Kanals das Definieren eines ersten Paares von ineinandergreifenden Lippen umfasst, wobei das Definieren des zweiten Kanals das Definieren eines zweiten Paares von ineinandergreifenden Lippen umfasst, wobei das Definieren des ersten Eingriffsabschnitts das Definieren eines ersten Widerhakens entlang einer ersten Kante des dritten Unterbauteils umfasst und wobei das Definieren des zweiten Eingriffsabschnitts das Definieren eines zweiten Widerhakens entlang einer zweiten Kante des dritten Unterbauteils umfasst.

14. Verfahren nach Anspruch 9, wobei der Zusammendrückschritt das Zusammendrücken der ersten Tafel, der zweiten Tafel und der Stegsektion in einer Presse umfasst und wobei, vorzugsweise, das Flugzeugbauteil aus der Presse entfernt wird, bevor der Klebstoff aushärtet.

15. Verfahren nach Anspruch 9, wobei der erste Eingriffsabschnitt einen Widerhaken einschließt, der für einen Einrasteingriff mit dem ersten Kanal konfiguriert ist, wobei der zweite Eingriffsabschnitt einen Widerhaken einschließt, der für einen Einrasteingriff mit dem zweiten Kanal konfiguriert ist, und wobei der Zusammendrückschritt das Zusammendrücken der ersten Tafel, der zweiten Tafel und der Stegsektion, bis der erste Eingriffsabschnitt und der erste Kanal miteinander einrasten und bis der zweite Eingriffsabschnitt und der zweite Kanal miteinander einrasten, umfasst.

## Revendications

1. Composant d'aéronef comprenant :
un premier panneau incluant un premier canal ;
un deuxième panneau incluant un deuxième canal, le deuxième panneau positionné de telle façon que le deuxième canal soit aligné avec le premier canal ;
une section d'âme disposée adjacente au premier panneau et au deuxième panneau, la section d'âme incluant une première partie d'engagement et une deuxième partie d'engagement, la première partie d'engagement engagée avec le premier canal et la deuxième partie d'engagement engagée avec le deuxième canal ; et un adhésif disposé entre la première partie d'engagement et le premier canal et entre la deuxième partie d'engagement et le deuxième canal, dans lequel le premier panneau et le second panneau sont joints ensemble par coopération de la section d'âme et de l'adhésif ;
dans lequel la première partie d'engagement et le premier canal sont configurés pour s'ajuster par pression ensemble et dans lequel la deuxième partie d'engagement et le deuxième canal sont configurés pour s'ajuster par pression ensemble.

2. Composant d'aéronef selon la revendication 1, dans lequel, de préférence, la première partie d'engagement inclut un premier barbillon s'étendant le long d'une longueur de la première partie d'engagement, le premier canal comprend une première lèvre s'étendant le long d'une longueur du premier canal, et la première lèvre est configurée pour engager le premier barbillon lorsque la première partie d'engagement est insérée jusque dans le premier canal, et dans lequel la deuxième partie d'engagement inclut un deuxième barbillon s'étendant le long d'une longueur de la deuxième partie d'engagement, le deuxième canal comprend une deuxième lèvre s'étendant le long d'une longueur du deuxième canal, et la deuxième lèvre est configurée pour engager le deuxième barbillon lorsque la deuxième partie d'engagement est insérée dans le deuxième canal.

3. Composant d'aéronef selon la revendication 1, dans lequel le composant d'aéronef est essentiellement exempt de toute fixation.

4. Composant d'aéronef selon la revendication 1, dans lequel le premier panneau est disposé opposé au deuxième panneau et dans lequel la section d'âme est disposée entre le premier panneau et le second panneau.

5. Composant d'aéronef selon la revendication 1, dans lequel le premier panneau inclut une pluralité de premiers canaux, dans lequel le deuxième panneau inclut une pluralité respective des deuxièmes canaux, le composant d'aéronef comprenant en outre une pluralité respective des sections d'âme, dans lequel chaque section d'âme est engagée avec un premier canal respectif et un deuxième canal respectif, et dans lequel l'adhésif est disposé entre chaque première partie d'engagement de chaque section d'âme et chaque premier canal respectif et entre chaque deuxième partie d'engagement de chaque section d'âme et chaque deuxième canal respectif ; et dans lequel, de préférence, un premier canal de la pluralité de premiers canaux est hors d'alignement avec un autre premier canal de la pluralité de premier canaux, dans lequel un deuxième canal de la pluralité de deuxième canaux est hors d'alignement avec un autre deuxième canal de la pluralité de deuxième canaux, et dans lequel l'un premier canal est aligné avec l'un deuxième canal.

6. Composant d'aéronef selon la revendication 1, dans lequel l'adhésif est engagé avec trois côtés de la première partie d'engagement et avec trois côtés de la deuxième partie d'engagement.

7. Composant d'aéronef selon la revendication 1, dans lequel l'adhésif comprend :
i) un adhésif liquide ; ou
ii) un adhésif en film.

8. Composant d'aéronef selon la revendication 1, dans lequel le premier panneau, le deuxième panneau et la section d'âme comprennent chacun un matériau métallique ; et dans lequel, de préférence, le matériau métallique comprend de l'aluminium.

9. Procédé de fabrication d'un composant d'aéronef, le procédé comprenant les étapes de :
obtenir un premier panneau ayant un premier canal, un second panneau ayant un deuxième canal, et une section d'âme ayant une première partie d'engagement et une deuxième partie d'engagement ; d'appliquer un adhésif à un de la première partie d'engagement et du premier canal et à un de la deuxième partie d'engagement et du deuxième canal ;
positionner le premier panneau, le deuxième panneau et la section d'âme de telle façon que la première partie d'engagement soit disposée adjacente au premier canal et de telle façon que la deuxième partie d'engagement soit disposée adjacente au deuxième canal ;
comprimer le premier panneau, le deuxième panneau et la section d'âme jusqu'à ce que la première partie d'engagement engage le premier canal et la deuxième partie d'engagement engage le deuxième canal pour former le composant d'aéronef ; dans lequel la première partie d'engagement et le premier canal sont configurés pour s'ajuster par pression ensemble et dans lequel la deuxième partie d'engagement et le deuxième canal sont configurés pour s'ajuster par pression ensemble.

10. Procédé selon la revendication 9, dans lequel l'étape d'obtention comprend :
d'obtenir au moins trois billettes de matériau ;
de retirer du matériau d'une première billette pour produire un premier sous-composant ayant une première épaisseur désirée ;
de retirer du matériau d'une deuxième billette pour produire un deuxième sous-composant ayant une deuxième épaisseur désirée ;
de retirer du matériau d'une troisième billette pour produire un troisième sous-composant ayant une troisième épaisseur désirée ;
de définir un premier canal dans le premier sous-composant pour former le premier panneau ; définir un deuxième canal dans le deuxième sous-composant pour former le deuxième panneau ;
définir une première partie d'engagement et une deuxième partie d'engagement sur le troisième sous-composant pour former une section d'âme.

11. Procédé selon la revendication 10, dans lequel l'étape d'obtention comprend :
d'obtenir une première billette de matériau ayant une première épaisseur initiale qui n'est pas essentiellement plus épaisse que la première épaisseur désirée ;
d'obtenir une deuxième billette de matériau ayant une deuxième épaisseur initiale qui n'est pas essentiellement plus épaisse que la deuxième épaisseur désirée ; et d'obtenir une troisième billette de matériau ayant une troisième épaisseur initiale qui n'est pas essentiellement plus épaisse que la troisième épaisseur désirée.

12. Procédé selon la revendication 10, dans lequel retirer du matériau de la première billette comprend d'usiner la première billette, dans lequel retirer du matériau de la deuxième billette comprend d'usiner la deuxième billette, et dans lequel retirer du matériau de la troisième billette comprend d'usiner la troisième billette.

13. Procédé selon la revendication 10, dans lequel définir le premier canal comprend de définir une première paire de lèvres d'engagement, dans lequel définir le deuxième canal comprend de définir une deuxième paire de lèvres d'engagement, dans lequel définir la première partie d'engagement comprend de définir un premier barbillon le long d'un premier bord du troisième sous-composant, et dans lequel définir la deuxième partie d'engagement comprend de définir un deuxième barbillon le long d'un deuxième bord du troisième sous-composant.

14. Procédé selon la revendication 9, dans lequel l'étape de compression comprend de comprimer le premier panneau, le deuxième panneau et la section d'âme dans une presse ; et dans lequel, de préférence, le composant d'aéronef est retiré de la presse avant que l'adhésif ne sèche.

15. Procédé selon la revendication 9, dans lequel la première partie d'engagement inclut un premier barbillon configuré pour s'engager par pression avec le premier canal, dans lequel la deuxième partie d'engagement inclut un deuxième barbillon configuré pour s'engager par pression avec le deuxième canal, et dans lequel l'étape de compression comprend de comprimer le premier panneau, le deuxième panneau et la section d'âme jusqu'à ce que la première partie d'engagement et le premier canal s'ajustent par pression ensemble et jusqu'à ce que la deuxième partie d'engagement et le deuxième canal s'ajustent par pression ensemble.
